# EUROPEAN PATENT SPECIFICATION

(11) **EP 4 080 020 B1**
(45) Date of publication and mention of the grant of the patent: **14.02.2024**
(21) Application number: 21213407.6
(22) Date of filing: 09.12.2021
(51) Int. Cl.: F01M 1/02, B62J 31/00, B62M 1/00, F01M 1/12, F01M 11/00, F01M 11/02, F02B 61/02

(54) **INTERNAL COMBUSTION ENGINE AND STRADDLED VEHICLE**
BRENNKRAFTMASCHINE UND GRÄTSCHSITZFAHRZEUG
MOTEUR À COMBUSTION INTERNE ET VÉHICULE À ENFOURCHER

(30) Priority: 23.04.2021 JP 2021073043
(43) Date of publication of application: 26.10.2022
(73) Proprietor: Yamaha Hatsudoki Kabushiki Kaisha, Iwata-shi, Shizuoka-ken 438-8501 (JP)
(72) Inventor: Wakuda, Masahiro, Iwata-shi (JP); Konya, Tsubasa, Iwata-shi (JP); Iida, Yoshihiro, Iwata-shi (JP)
(74) Representative: Grünecker Patent- und Rechtsanwälte PartG mbB

(56) References cited:
- US-A1- 2002 003 064
- US-A1- 2004 108 166
- US-A1- 2013 333 980
- US-B1- 6 318 333

## Description

The present invention relates to a straddled vehicle according to the preamble of independent claim 1. Such a straddled vehicle can be taken from the prior art document US 6 318 333 B1.

As disclosed in JP H4-298618 A, for example, internal combustion engines using dry-sump lubrication are known in the art. An internal combustion engine that uses dry-sump lubrication includes an oil pan, an oil tank, a scavenge pump that pumps oil from the oil pan to the oil tank, and a feed pump that pumps oil from the oil tank to sliding parts of the internal combustion engine.

When the amount of oil in the oil pan increases, the crank web of the crank shaft is immersed in oil, thereby increasing the rotational friction of the crank shaft. In order to prevent the amount of oil in the oil pan from becoming excessive, the pump volume of the scavenge pump is normally set to be larger than the pump volume of the feed pump. The capacity of the scavenge pump is normally set to be larger than the capacity of the feed pump.

Oil to be transferred from the scavenge pump is stored in the oil tank. When the oil tank becomes full, the load on the scavenge pump becomes high. In order to prevent a large load on the scavenge pump, the oil tank is formed to be larger and is set so as not to become full.

However, if the oil tank is formed to be larger, it leads to an increase in the size of the internal combustion engine.

It is an object of the present invention to provide a straddled vehicle with an internal combustion engine that can make oil tanks smaller for internal combustion engines using dry-sump lubrication. According to the present invention said object is solved by a straddled vehicle having the features of independent claim 1. Preferred embodiments are laid down in the dependent claims.

An internal combustion engine disclosed herein includes: a case; a crank shaft rotatably supported on the case; a first side wall arranged inside the case to partition the inside of the case into a first chamber and a second chamber; an oil pan provided on a bottom portion of the first chamber to store oil therein; an oil tank formed in the second chamber; a scavenge pump having a first intake port that communicates with the oil pan and a discharge port that communicates with the oil tank; and a feed pump having a second intake port that communicates with the oil tank. An oil return hole that connects together the oil tank and the first chamber is formed in an upper portion of the first side wall.

With the internal combustion engine described above, if the amount of oil stored in the oil tank increases, oil flows over through oil return hole into the first chamber to return to the oil pan. Without making the oil tank larger, it is possible to prevent the oil tank from becoming full. Without making the oil tank larger, it is possible to prevent a large load on the scavenge pump. Therefore, the oil tank can be made smaller.

The internal combustion engine include a guide rib protruding from the first side wall toward the first chamber. The guide rib may be formed so as to guide oil, which flows into the first chamber from the oil tank through the oil return hole, into the oil pan.

Thus, it is possible to smoothly guide oil, which has flown over the oil tank, into the oil pan.

The guide rib may include a first rib portion arranged upward relative to a lower end of the oil return hole, and a second rib portion arranged at or below a lower end of the oil return hole. The first rib portion and the second rib portion may extend downward.

Thus, with the first rib portion and the second rib portion, it is possible to suppress scattering of oil, which has flown into the first chamber through the oil return hole. It is possible to smoothly guide oil from the oil return hole into the oil pan.

The case and the guide rib may together define an oil path that connects together the oil return hole and the oil pan.

Thus, oil, which has flown into the first chamber through the oil return hole, is guided into the oil pan through the oil path defined.

The internal combustion engine may include an intake path that has an inlet facing the oil pan and communicates with the first intake port of the scavenge pump. The crank shaft may include a crank web. A lower end of the guide rib may be located downward relative to the crank web and upward relative to the inlet of the intake path.

Thus, with the guide rib, it is possible to suppress fluctuation of the oil surface of the oil pan. Moreover, with the guide rib, it is possible to preferably supply oil to the inlet of the intake path. Thus, the scavenge pump can stably suck in oil.

Where an axis direction of the crank shaft is assumed to be a left-right direction and a horizontal direction perpendicular to the axis direction of the crank shaft is assumed to be a front-rear direction, the oil return hole may be located forward relative to an axis of the crank shaft. The guide rib include a portion located forward relative to a front end of the oil pan and a portion located rearward relative to the front end of the oil pan.

Thus, with the guide rib, it is possible to preferably suppress fluctuation of the oil surface of the oil pan.

There is no particular limitation on the position of the oil return hole in the up-down direction. The oil return hole may be located upward relative to an axis of the crank shaft.

The internal combustion engine may include a generator connected to an end portion of the crank shaft. The case may have an arc-shaped vertical wall located outward in a radial direction of the generator as viewed from an axis direction of the crank shaft. The vertical wall may partition a portion of the oil tank.

Thus, the oil tank is arranged next to the generator.

The case may include a crank case that rotatably supports the crank shaft. The first side wall may be provided in the crank case. The case may include a crank case cover having a second side wall arranged sideward of the first side wall. The internal combustion engine may include a partition side wall arranged between the first side wall of the crank case and the second side wall of the crank case cover. The oil tank may be formed between the first side wall and the partition side wall. An auxiliary tank may be formed between the second side wall and the partition side wall. An oil tank inlet that connects together the auxiliary tank and the oil tank may be formed between the first side wall and the second side wall. The discharge port of the scavenge pump may communicate with the oil tank via the auxiliary tank.

Thus, as the discharge port of the scavenge pump communicates with the oil tank via the auxiliary tank, the flow velocity of oil transferred from the scavenge pump decreases in the auxiliary tank. This suppresses a rapid flow of oil into the oil tank. Gas-liquid separation is performed in the auxiliary tank. Therefore, it is possible to suppress mixing of bubbles in oil in the oil tank. The feed pump can more stably supply oil from the oil tank.

The oil tank inlet may be formed upward of the partition side wall.

Thus, oil flows from the auxiliary tank into the oil tank by coming over the partition wall.

The oil return hole may be formed upward relative to a lower end of an upper edge of the partition side wall.

The auxiliary tank may be formed so that a flow path cross-sectional area of the auxiliary tank increases gradually in an upward direction.

Thus, in the auxiliary tank, the flow velocity of oil decreases gradually in the upward direction. This suppresses a rapid flow of oil into the oil tank.

The first side wall, the second side wall and the partition side wall may be perpendicular to an axis of the crank shaft.

A straddled vehicle disclosed herein includes the internal combustion engine.

### Advantageous Effects Of Invention

According to the present invention, it is possible to make oil tanks smaller for internal combustion engines using dry-sump lubrication.

### BRIEF DESCRIPTION OF THE DRAWINGS

FIG. 1 is a right side view of a motorcycle according to one embodiment.
FIG. 2 is a front view of an internal combustion engine.
FIG. 3 is a left side view of a crank case and a crank case cover.
FIG. 4 is a left side view of the crank case.
FIG. 5 is a left side view of a gasket and the crank case.
FIG. 6 is a partial enlarged perspective view showing the inside of the internal combustion engine, with the crank case cover partially removed.
FIG. 7 is a cross-sectional view showing an internal configuration of the internal combustion engine as viewed from the right side.
FIG. 8 is an oil circulation circuit diagram.
FIG. 9 is a horizontal cross-sectional view showing an example of a configuration of a guide rib.
FIG. 10 is a horizontal cross-sectional view showing an example of another configuration of a guide rib.
FIG. 11 is a front view of a crank case and a crank case cover having cooling fins.

### DETAILED DESCRIPTION OF THE PREFERRED EMBODIMENTS

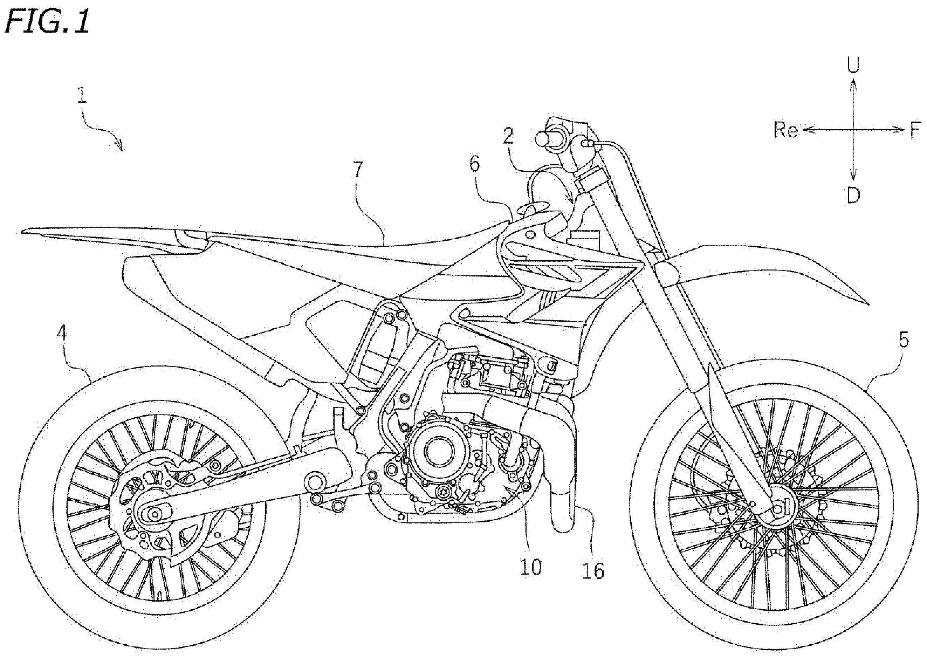

An embodiment will now be described with reference to the drawings. FIG. 1 is a right side view of a motorcycle 1, which is an example of a straddled vehicle. The motorcycle 1 includes a vehicle body frame 2, an internal combustion engine (hereinafter referred to as an engine) 10 supported on the vehicle body frame 2, a rear wheel 4 driven by the engine 10, a front wheel 5, a fuel tank 6, and a seat 7 in which the rider sits.

The terms front, rear, left, right, up and down, as used in the description below, refer to these directions as viewed from a virtual rider seated on a seat 7 while the motorcycle 1 is standing upright on a horizontal surface with no rider and no load thereon, unless specified otherwise. The designations F, Re, L, R, U and D, as used in the figures, refer to front, rear, left, right, up and down, respectively. The term "forward" refers not only to the direction that extends in the front direction along the vehicle center line, as the vehicle is viewed from above, but also to directions that are inclined from that direction by an angle that is less than 90 degrees in the vehicle left-right direction. Similarly, the term "rearward" refers not only to the direction that extends rearward along the vehicle center line, as the vehicle is viewed from above, but also to directions that are inclined from that direction by an angle that is less than 90 degrees in the vehicle left-right direction. The vehicle front-rear direction F-Re extends along the vehicle center line as the vehicle is viewed from above or viewed from the side. The term "leftward" refers not only to the direction that extends leftward vertical to the vehicle center line, as the vehicle is viewed from above, but also to directions that are inclined from that direction by an angle that is less than 90 degrees in the vehicle front-rear direction. The term "rightward" refers not only to the direction that extends rightward vertical to the vehicle center line, as the vehicle is viewed from above, but also to directions that are inclined from that direction by an angle that is less than 90 degrees in the vehicle front-rear direction. The vehicle left-right direction L-R extends in the vehicle width direction as the vehicle is viewed from above or viewed from the front or the rear and relates to the view direction of a rider sitting on the seat of the vehicle. The term "upward" refers not only to the vertically upward direction, as the vehicle is viewed from the side, but also to directions that are inclined from that direction by an angle that is less than 90 degrees in the vehicle front-rear direction. The term "downward" refers not only to the vertically downward direction, as the vehicle is viewed from the side, but also to directions that are inclined from that direction by an angle that is less than 90 degrees in the vehicle front-rear direction. The vehicle up-down direction U-D extends in the vertical direction of the vehicle as the vehicle is viewed from the side or viewed from the front or the rear.

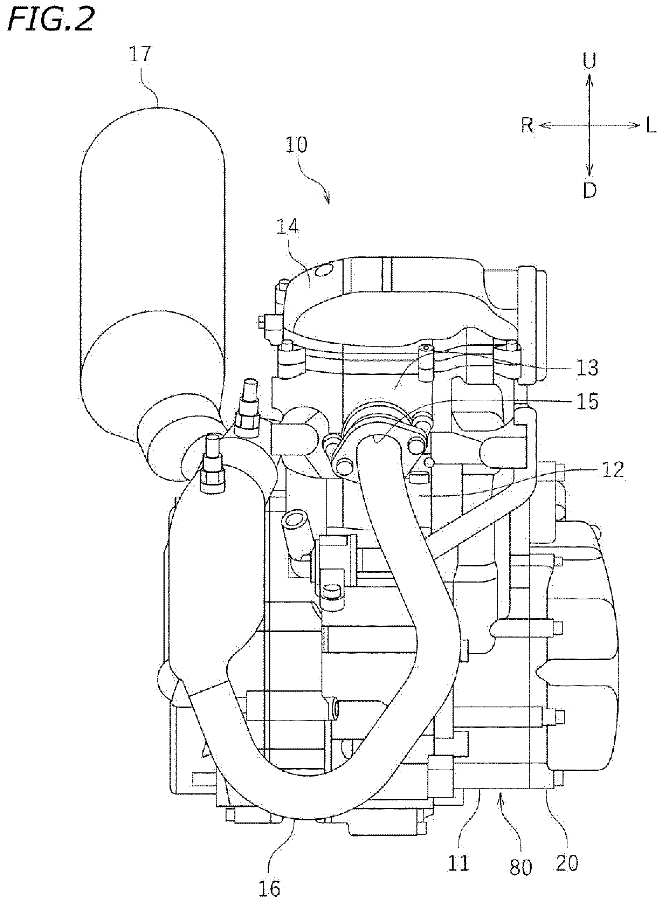

FIG. 2 is a front view of the engine 10. The engine 10 includes a crank case 11, a cylinder body 12 connected to the crank case 11, a cylinder head 13 connected to the cylinder body 12, and a cylinder head cover 14 connected to the cylinder head 13. The cylinder body 12 extends upward from the crank case 11. The cylinder head 13 extends upward from the cylinder body 12. The engine 10 includes a crank case cover 20 connected to the crank case 11. The crank case 11 and the crank case cover 20 together form a case 80. The crank case cover 20 is arranged sideward of the crank case 11. Here, the crank case cover 20 is arranged leftward of the crank case 11.

An intake port (not shown) and an exhaust port 15 are formed on the cylinder head 13. An exhaust pipe 16 is connected to the exhaust port 15. A silencer 17 is connected to a rear end portion of the exhaust pipe 16.

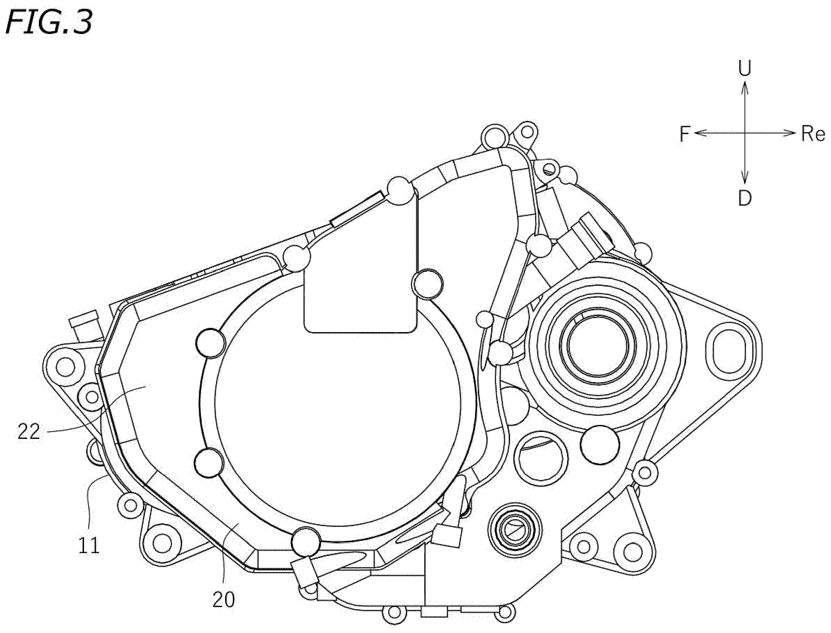

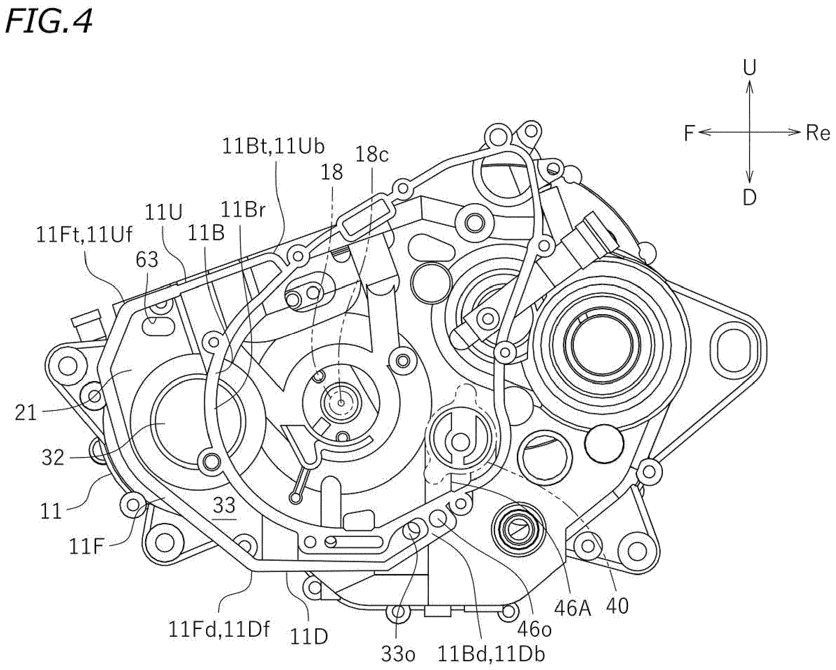

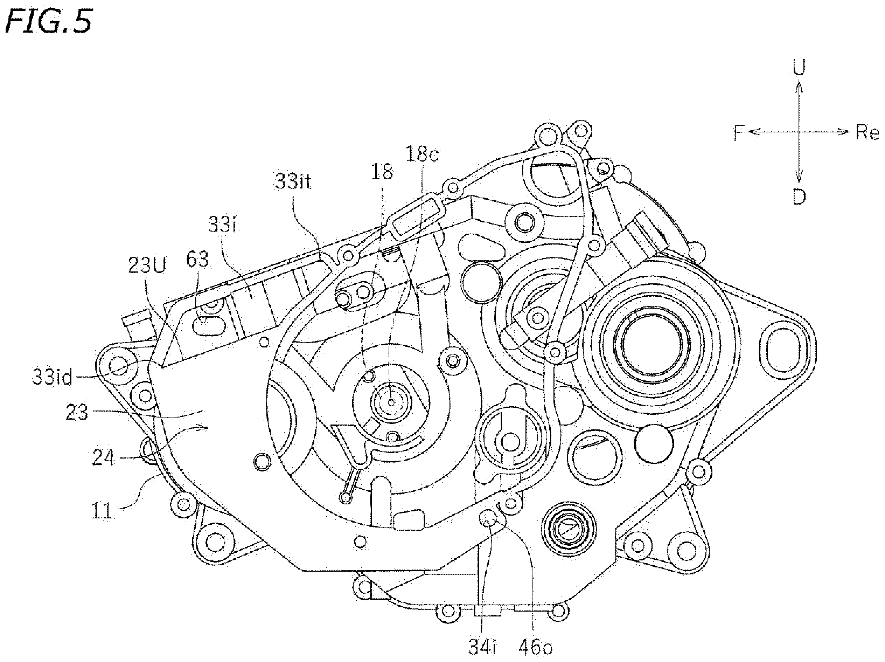

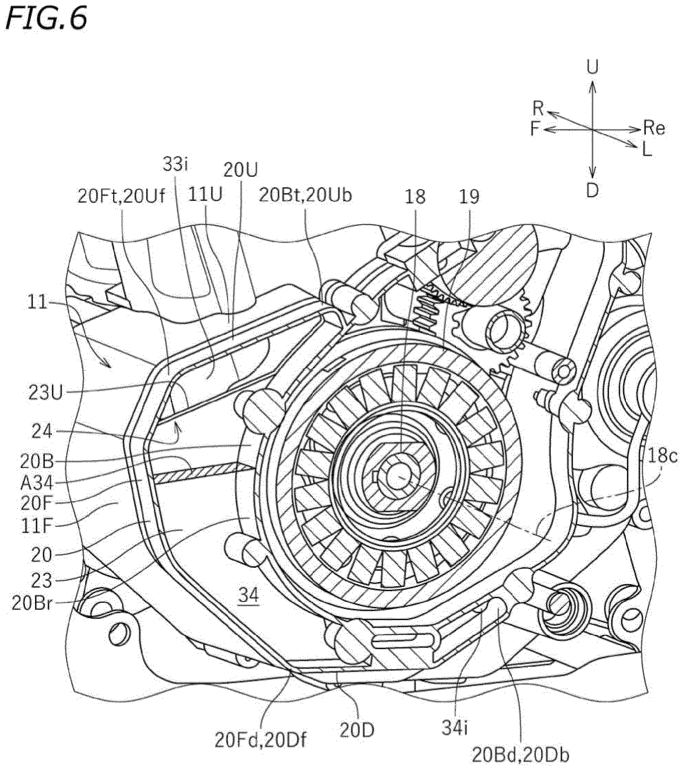

FIG. 3 is a left side view of the crank case 11 and the crank case cover 20 of the engine 10. FIG. 4 is a left side view of the crank case 11. A gasket 24 is sandwiched between the crank case 11 and the crank case cover 20. FIG. 5 is a left side view of the gasket 24 and the crank case 11. FIG. 6 is a partial enlarged perspective view showing the inside of the engine 10, with the crank case cover 20 partially removed.

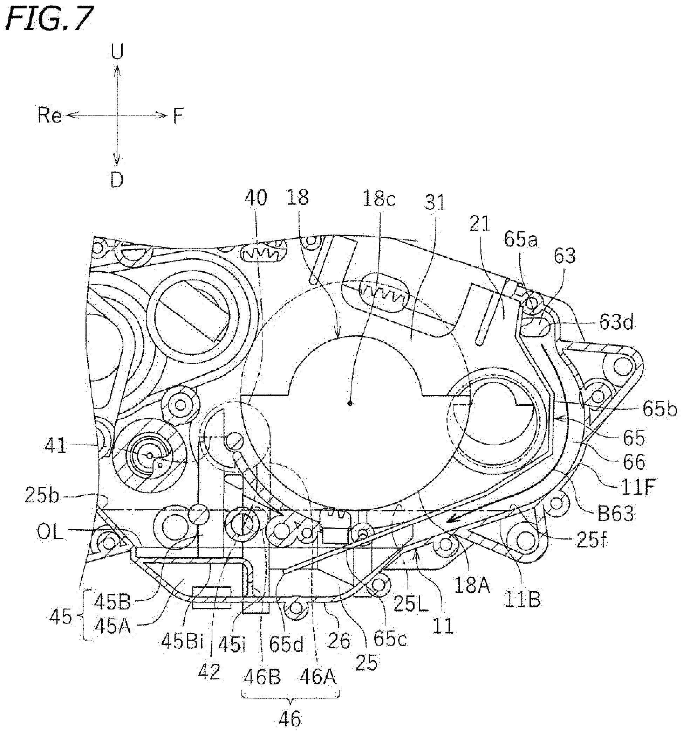

As shown in FIG. 6, the engine 10 includes the crank shaft 18. The crank shaft 18 is rotatably supported on the crank case 11. The crank shaft 18 extends leftward and rightward. A straight line 18c represents the axis of the crank shaft 18. As shown in FIG. 7, the crank shaft 18 includes a crank web 18A.

A generator 19 is connected to an end portion of the crank shaft 18. The generator 19 is connected to the left end portion of the crank shaft 18. As viewed from the axis direction of the crank shaft 18, the generator 19 is formed in a generally circular shape.

As shown in FIG. 4, the crank case 11 has a first side wall 21. The first side wall 21 is a wall that is perpendicular to an axis 18c of the crank shaft 18. The first side wall 21 extends in the up-down direction and the front-rear direction. FIG. 7 is a cross-sectional view showing an internal configuration of the engine 10 as viewed from the right side. A first chamber 31 is defined rightward of the first side wall 21. As shown in FIG. 4, a second chamber 32 is defined leftward of the first side wall 21. The first side wall 21 is arranged inside the crank case 11. The first side wall 21 partitions the inside of the crank case 11 into the first chamber 31 and the second chamber 32.

As shown in FIG. 7, the crank case 11 has a bottom wall 26. The bottom wall 26 defines an oil pan 25 that stores lubricating oil (hereinafter referred to as oil). In FIG. 7, a straight line OL represents an example of the oil surface. For example, the oil surface OL may be the oil surface when the motorcycle 1 is stopped standing upright on a horizontal surface and the engine 10 is stopped. Note however that the height of the oil surface OL varies depending on the amount of oil filled in the engine 10. The height of the oil surface OL varies also depending on the operation status of the engine 10. As used herein, the oil pan 25 refers to a portion of the crank case 11 that is at or below the horizontal plane passing through the lowermost end of the crank web 18A. In FIG. 7, a one-dot-chain line 25L represents the horizontal surface passing through the lowermost end of the crank web 18A. In FIG. 7, the oil pan 25 refers to a portion of the crank case 11 that is at or below the one-dot-chain line 25L. Note that the crank web 18A is formed in a non-circular shape. The position of the lower end of the crank web 18A varies depending on the rotational position of the crank web 18A. The lowermost end of the crank web 18A refers to the lowest end of the lower end of the crank web 18A. The oil pan 25 is depressed downward. The oil pan 25 is provided on the bottom wall of the first chamber 31.

The engine 10 is an internal combustion engine using dry-sump lubrication. The engine 10 includes a scavenge pump 40. The scavenge pump 40 includes an intake port 41 and a discharge port 42. The intake port 41 communicates with the oil pan 25 via an intake path 45.

The intake path 45 includes an intake chamber 45A and a passageway 45B. An inlet 45i is formed on the intake chamber 45A. While there is no particular limitation on the position of the inlet 45i, the inlet 45i is herein formed at the front end of the intake chamber 45A. The inlet 45i serves as an inlet for the intake path 45. The inlet 45i has an opening facing toward the oil pan 25. The inlet 45i communicates between the oil pan 25 and the intake chamber 45A. The passageway 45B extends upward. An opening 45Bi that has an opening facing toward the intake chamber 45A is formed at the lower end of the passageway 45B.

The scavenge pump 40 transfers oil toward an oil tank 33 to be described later. The discharge port 42 of the scavenge pump 40 communicates with the oil tank 33 via a discharge path 46. In the present embodiment, the discharge path 46 includes a passageway 46A extending downward, and a passageway 46B extending leftward from the passageway 46A. As shown in FIG. 4, an outlet 46o of the discharge path 46 is formed on the first side wall 21. The outlet 46o has an opening facing leftward.

As shown in FIG. 3, the crank case cover 20 has a second side wall 22 arranged sideward of the first side wall 21. The second side wall 22 is arranged leftward of the first side wall 21. As with the first side wall 21, the second side wall 22 is perpendicular to the axis 18c of the crank shaft 18. The second side wall 22 extends in the up-down direction and the front-rear direction.

As shown in FIG. 5, the gasket 24 has a partition side wall 23 arranged between the first side wall 21 of the crank case 11 and the second side wall 22 of the crank case cover 20. The partition side wall 23 is arranged leftward of the first side wall 21. The partition side wall 23 is arranged rightward of the second side wall 22. As with the first side wall 21, the partition side wall 23 is perpendicular to the axis 18c of the crank shaft 18. The partition side wall 23 extends in the up-down direction and the front-rear direction.

The oil tank 33 is defined between the first side wall 21 and the partition side wall 23. As shown in FIG. 4, the crank case 11 has a front wall 11F, an upper wall 11U, a lower wall 11D and a rear wall 11B. The front wall 11F, the upper wall 11U, the lower wall 11D and the rear wall 11B extend leftward. An upper end 11Ft of the front wall 11F and a front end 11Uf of the upper wall 11U are connected together. A lower end 11Fd of the front wall 11F and a front end 11Df of the lower wall 11D are connected together. An upper end 11Bt of the rear wall 11B and a rear end 11Ub of the upper wall 11U are connected together. A lower end 11Bd of the rear wall 11B and a rear end 11Db of the lower wall 11D are connected together. The front wall 11F, the upper wall 11U, the lower wall 11D and the rear wall 11B are connected into a loop. The oil tank 33 is defined by the first side wall 21, the partition side wall 23, the front wall 11F, the upper wall 11U, the lower wall 11D and the rear wall 11B. The oil tank 33 is formed in a front portion of the crank case 11. The rear wall 11B has an arc-shaped vertical wall 11 Br located outward in the radial direction of the generator 19, as viewed from the axis direction of the crank shaft 18. The vertical wall 11Br defines a part of the oil tank 33. The oil tank 33 is arranged next to the generator 19.

An auxiliary tank 34 is defined between the second side wall 22 and the partition side wall 23. As shown in FIG. 6, the crank case cover 20 has a front wall 20F, an upper wall 20U, a lower wall 20D and a rear wall 20B corresponding to the front wall 11F, the upper wall 11U, the lower wall 11D and the rear wall 11B of the crank case 11, respectively. The front wall 20F, the upper wall 20U, the lower wall 20D and the rear wall 20B extend rightward. An upper end 20Ft of the front wall 20F and a front end 20Uf of the upper wall 20U are connected together. A lower end 20Fd of the front wall 20F and a front end 20Df of the lower wall 20D are connected together. An upper end 20Bt of the rear wall 20B and a rear end 20Ub of the upper wall 20U are connected together. A lower end 20Bd of the rear wall 20B and a rear end 20Db of the lower wall 20D are connected together. The front wall 20F, the upper wall 20U, the lower wall 20D and the rear wall 20B are connected into a loop. The auxiliary tank 34 is defined by the second side wall 22, the partition side wall 23, the front wall 20F, the upper wall 20U, the lower wall 20D and the rear wall 20B. The auxiliary tank 34 is formed in a front portion of the crank case cover 20. The rear wall 20B has an arc-shaped vertical wall 20Br located outward in the radial direction of the generator 19, as viewed from the axis direction of the crank shaft 18. The vertical wall 20Br defines a part of the auxiliary tank 34. The auxiliary tank 34 is arranged next to the generator 19.

As shown in FIG. 5, an auxiliary tank inlet 34i is formed on the gasket 24. The auxiliary tank inlet 34i is a through hole formed in the gasket 24. The auxiliary tank inlet 34i overlaps with the outlet 46o of the discharge path 46 (see FIG. 4). The auxiliary tank inlet 34i is connected to the outlet 46o of the discharge path 46. Here, the auxiliary tank inlet 34i has an opening facing leftward. The auxiliary tank inlet 34i is formed in a lower portion of the auxiliary tank 34. The auxiliary tank inlet 34i is formed in a rear portion of the auxiliary tank 34.

As shown in FIG. 6, an upper edge 23U of the partition side wall 23 is located downward relative to the upper wall 11U of the crank case 11 and the upper wall 20U of the crank case cover 20. An oil tank inlet 33i that connects together the auxiliary tank 34 and the oil tank 33 is formed upward of the partition side wall 23. Oil in the auxiliary tank 34 flows into the oil tank 33 by coming over the partition side wall 23. The opening area of the oil tank inlet 33i is relatively large. As shown in FIG. 5, the opening area of the oil tank inlet 33i is larger than the opening area of the auxiliary tank inlet 34i.

The oil tank inlet 33i is formed upward relative to the auxiliary tank inlet 34i. Oil in the auxiliary tank 34 flows upward toward the oil tank inlet 33i. As shown in FIG. 6, in the upper half portion of the auxiliary tank 34, the interval in the front-rear direction between the front wall 20F and the rear wall 20B of the crank case cover 20 increases gradually in the upward direction. The auxiliary tank 34 is formed so that a flow path cross-sectional area A34 increases gradually in the upward direction. The auxiliary tank 34 is formed so that the flow path cross-sectional area A34 increases gradually toward the oil tank inlet 33i.

As shown in FIG. 4, an oil tank outlet 33o is formed on the crank case 11. The oil tank outlet 33o has an opening facing leftward. The oil tank outlet 33o is formed in a lower portion of the oil tank 33. The oil tank outlet 33o is formed in a rear portion of the oil tank 33.

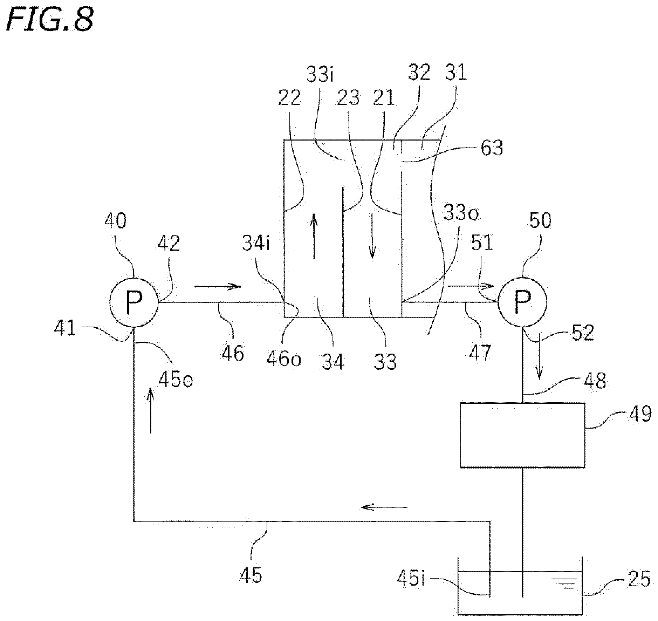

FIG. 8 is an oil circulation circuit diagram. The engine 10 includes a feed pump 50 for supplying oil to sliding parts 49 of the engine 10. The feed pump 50 includes an intake port 51 and a discharge port 52. The oil tank outlet 33o is connected to the intake port 51 of the feed pump 50 via an oil path 47. The discharge port 52 of the feed pump 50 communicates with the sliding parts 49 of the engine 10 via an oil path 48.

As shown in FIG. 4, an oil return hole 63 that connects together the oil tank 33 and the first chamber 31 is formed in an upper portion of the first side wall 21. Note that an upper portion of the first side wall 21 refers to a portion of the first side wall 21 that is upward relative to the middle position thereof in the up-down direction. The first side wall 21 defines the right side of the oil tank 33. An upper portion of the first side wall 21 may be a portion of the oil tank 33 that is upward relative to the middle position thereof in the up-down direction. The oil return hole 63 may be formed at a position that is within 30% of the dimension in the up-down direction of the first side wall 21 from the upper end of the first side wall 21, or may be formed at a position that is within 20%. The oil return hole 63 may be formed at a position that is within 30% of the dimension in the up-down direction of the oil tank 33 from the upper end of the oil tank 33, or may be formed at a position that is within 20%. The oil return hole 63 is located upward relative to the axis 18c of the crank shaft 18.

As shown in FIG. 5, in the present embodiment, the oil return hole 63 is formed upward relative to a lower end 33id of the oil tank inlet 33i. Note that the lower end 33id of the oil tank inlet 33i corresponds to the lower end of the upper edge 23U of the partition side wall 23. The oil return hole 63 is formed upward relative to the lower end of the upper edge 23U of the partition side wall 23. The oil return hole 63 is formed downward relative to an upper end 33it of the oil tank inlet 33i. Note however that there is no particular limitation on the position of the oil return hole 63 relative to the lower end 33id and the upper end 33it of the oil tank inlet 33i.

The oil return hole 63 serves to return oil that flows over the oil tank 33 back into the first chamber 31. As indicated by an arrow B63 in FIG. 7, oil having flown into the first chamber 31 from the oil return hole 63 falls down to be collected in the oil pan 25.

The first side wall 21 is provided with a guide rib 65 protruding toward the first chamber 31. The guide rib 65 protrudes rightward from the first side wall 21. The guide rib 65 is formed so as to guide oil, which flows into the first chamber 31 from the oil return hole 63, into the oil pan 25. The guide rib 65 includes a first rib portion 65a arranged upward relative to a lower end 63d of the oil return hole 63, and a second rib portion 65b arranged at or below the lower end 63d of the oil return hole 63. The first rib portion 65a is arranged rearward of the oil return hole 63. The first rib portion 65a and the second rib portion 65b extend downward. The first rib portion 65a and the second rib portion 65b are connected together. The guide rib 65 includes a third rib portion 65c extending downward and rearward. The second rib portion 65b and the third rib portion 65c are connected together.

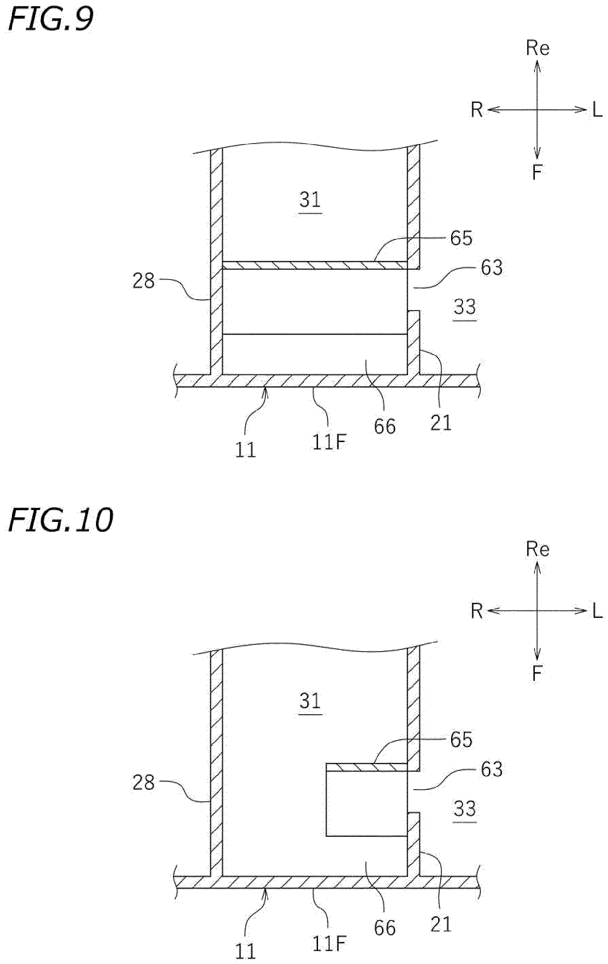

The front wall 11F and the lower wall 11D of the crank case 11 and the guide rib 65 together define an oil path 66 that connects together the oil return hole 63 and the oil pan 25. As schematically shown in FIG. 9, the crank case 11 includes another side wall 28 located rightward of the first side wall 21. The guide rib 65 may extend from the first side wall 21 to the other side wall 28. The guide rib 65 may be connected to, or in contact with, the other side wall 28. As shown in FIG. 10, the guide rib 65 may be spaced apart from the other side wall 28. The right end of the guide rib 65 may be located leftward relative to the other side wall 28.

As shown in FIG. 7, the oil pan 25 is formed of a portion of the bottom wall 26 of the crank case 11 that is depressed downward. A front end 25f of the oil pan 25 is located forward relative to the axis 18c of the crank shaft 18. A rear end 25b of the oil pan 25 is located rearward relative to the axis 18c of the crank shaft 18. The oil return hole 63 is formed forward relative to the axis 18c of the crank shaft 18. The guide rib 65 extends from a position forward relative to the axis 18c of the crank shaft 18 to a position rearward relative to the axis 18c of the crank shaft 18.

The crank shaft 18 includes the crank web 18A. A lower end 65d of the guide rib 65 is located downward relative to the crank web 18A. Note that the crank web 18A moves following the rotation of the crank shaft 18. As used herein, "being located downward relative to the crank web 18A" means being located downward relative to the crank web 18A having moved to the most downward position. The lower end 65d of the guide rib 65 is located downward relative to the upper end of the oil pan 25. The lower end 65d of the guide rib 65 is arranged upward relative to the inlet 45i of the intake path 45.

In the present embodiment, the lower end 65d of the guide rib 65 coincides with the rear end of the guide rib 65. The lower end 65d of the guide rib 65 is located rearward relative to the front end 25f of the oil pan 25. The lower end 65d of the guide rib 65 is located rearward relative to the foremost end of the crank web 18A. The lower end 65d of the guide rib 65 is located forward relative to the rear end 25b of the oil pan 25. The lower end 65d of the guide rib 65 is located forward relative to the rearmost end of the crank web 18A. The lower end 65d of the guide rib 65 is located forward relative to the intake chamber 45A. The lower end 65d of the guide rib 65 is located rearward relative to the middle position between the front end 25f of the oil pan 25 and the intake chamber 45A for the front-rear direction.

The engine 10 is configured as described above. Next, oil circulation in the engine 10 will be described. Note that in the following description, upstream side refers to the side from which oil flows. Downstream side refers to the side toward which oil flows.

The oil pan 25 stores oil therein. As indicated by an arrow in FIG. 8, oil in the oil pan 25 is sucked into the scavenge pump 40 through the intake path 45. The scavenge pump 40 transfers oil to the auxiliary tank 34 through the discharge path 46. Oil, which has been transferred to the auxiliary tank 34, flows upward in the auxiliary tank 34 and flows into the oil tank 33 through the oil tank inlet 33i.

In the present embodiment, oil is not directly transferred from the discharge path 46 to the oil tank 33. Oil is once transferred to the auxiliary tank 34, and then transferred to the oil tank 33. The flow path cross-sectional area of the auxiliary tank 34 is larger than the flow path cross-sectional area of the discharge path 46. The flow velocity of oil is relatively high in the discharge path 46, but it is relatively low in the auxiliary tank 34. Before oil flows into the oil tank 33, the flow velocity of oil decreases. Therefore, oil slowly flows into the oil tank 33 from the auxiliary tank 34. This suppresses a rapid flow of oil into the oil tank 33. This suppresses mixing of bubbles in oil in the oil tank 33.

The auxiliary tank 34 has a gas-liquid separation function. Even if bubbles are mixed in the oil transferred from the discharge path 46, oil and air are separated from each other in the auxiliary tank 34. Oil, from which air has been separated, flows into the oil tank 33. This suppresses mixing of bubbles in oil in the oil tank 33.

Oil in the oil tank 33 is sucked into the feed pump 50 through the oil path 47. The feed pump 50 supplies oil to the sliding parts 49 of the engine 10 through the oil path 48. After lubricating the sliding parts 49, oil returns to the oil pan 25 to be stored in the oil pan 25.

Now, if the oil tank 33 becomes full, the internal pressure of the oil tank 33 increases. In that case, there is a high load on the scavenge pump 40. According to the present embodiment, however, the oil return hole 63 is formed in the oil tank 33. When the amount of oil transferred to the oil tank 33 temporarily becomes large, oil in the oil tank 33 flows out through the oil return hole 63. Therefore, it is possible to avoid the oil tank 33 becoming full. This suppresses the load on the scavenge pump 40 from becoming high.

As shown in FIG. 7, oil, which has flown into the first chamber 31 from the oil tank 33 through the oil return hole 63, is guided to the oil pan 25 by the guide rib 65. This suppresses scattering of oil, which has flown over the oil tank 33, in the first chamber 31. Oil, which has flown over the oil tank 33, is smoothly guided into the oil pan 25.

Next, various advantageous effects realized by the engine 10 according to the present embodiment will be described.

As described above, with the engine 10 according to the present embodiment, the oil return hole 63 is formed in an upper portion of the first side wall 21. If the amount of oil to be transferred from the scavenge pump 40 to the oil tank 33 increases temporarily, oil flows out from the oil tank 33 through the oil return hole 63. Therefore, there is no need to make the oil tank 33 larger in advance so as to avoid the oil tank 33 becoming full. According to the present embodiment, without making the oil tank 33 larger, it is possible to prevent a large load on the scavenge pump 40. Therefore, it is possible to make the oil tank 33 smaller.

As shown in FIG. 7, according to the present embodiment, the guide rib 65 is provided for guiding oil, which flows into the first chamber 31 through the oil return hole 63, into the oil pan 25. Therefore, oil flowing over the oil tank 33 can be smoothly guided into the oil pan 25.

According to the present embodiment, the guide rib 65 includes the first rib portion 65a arranged upward relative to the lower end 63d of the oil return hole 63, and the second rib portion 65b arranged at or below the lower end 63d of the oil return hole 63. The first rib portion 65a and the second rib portion 65b extend downward. With the first rib portion 65a and the second rib portion 65b, it is possible to suppress scattering of oil, which has flown into the first chamber 31 through the oil return hole 63. Therefore, it is possible to smoothly guide oil from the oil return hole 63 into the oil pan 25.

According to the present embodiment, the front wall 11F and the lower wall 11D of the crank case 11 and the guide rib 65 together define the oil path 66 that connects together the oil return hole 63 and the oil pan 25. With the oil path 66, it is possible to smoothly guide oil from the oil return hole 63 into the oil pan 25.

According to the present embodiment, the guide rib 65 extends to a relatively low position. The lower end 65d of the guide rib 65 is located downward relative to the crank web 18A and upward relative to the inlet 45i of the intake path 45. Since the lower end 65d is located at a relatively low position, it is possible to suppress fluctuation of the oil surface by the guide rib 65. It is possible to suppress fluctuation of the oil surface, irrespective of fluctuation of pressure caused by the piston (not shown) of the engine 10 moving up and down. When the motorcycle 1 decelerates, oil in the oil pan 25 tends to move forward due to an inertial force. According to the present embodiment, upon sudden braking of the motorcycle 1, oil may possibly move temporarily forward from the oil pan 25, but that oil flows into the oil path 66. Thus, oil is unlikely to scatter upon sudden braking of the motorcycle 1. After sudden braking of the motorcycle 1, oil quickly returns from the oil path 66 into the oil pan 25. Since the lower end 65d of the guide rib 65 is located upward relative to the inlet 45i of the intake path 45, oil can be quickly supplied from the oil path 66 to the inlet 45i after sudden braking.

According to the present embodiment, the guide rib 65 extends from a position forward relative to the front end 25f of the oil pan 25 to a position rearward relative to the front end 25f of the oil pan 25. The rear end of the guide rib 65 (in the present embodiment, the rear end of the guide rib 65 coincides with the lower end 65d) is located rearward relative to the front end 25f of the oil pan 25. The guide rib 65 comes into contact with oil in the oil pan 25. Therefore, with the guide rib 65, it is possible to suppress fluctuation of the oil surface of the oil pan 25.

Although there is no particular limitation on the position of the oil return hole 63, it is preferably a relatively high position. In the present embodiment, the oil return hole 63 is located upward relative to the axis 18c of the crank shaft 18. The oil return hole 63 is located upward relative to the lower end of the upper edge 23U of the partition side wall 23. By forming the oil return hole 63 at a relatively high position, it is possible to ensure a sufficient storing volume of the oil tank 33.

If oil rapidly flows into the oil tank 33, bubbles may be mixed in oil flowing into the oil tank 33. According to the present embodiment, however, the auxiliary tank 34 is provided upstream of the oil tank 33. The flow velocity of oil decreases in the auxiliary tank 34. This suppresses a rapid flow of oil into the oil tank 33. Gas-liquid separation is performed in the auxiliary tank 34. Therefore, it is possible to suppress mixing of bubbles in oil in the oil tank 33. It is possible to more stably supply oil to the sliding parts 49 from the feed pump 50.

According to the present embodiment, the auxiliary tank 34 is formed so that the flow path cross-sectional area A34 of the auxiliary tank 34 increases gradually in the upward direction. The auxiliary tank 34 is formed so that the flow path cross-sectional area A34 of the auxiliary tank 34 increases gradually toward the oil tank inlet 33i. Therefore, the flow velocity of oil decreases gradually in the upward direction. The flow velocity of oil decreases gradually toward the oil tank inlet 33i. This further suppresses a rapid flow of oil into the oil tank 33. It is possible to further suppress mixing of bubbles in oil in the oil tank 33.

According to the present embodiment, the front wall 11F of the crank case 11 defines a part of the oil tank 33. The front wall 20F of the crank case cover 20 defines a part of the auxiliary tank 34. When the motorcycle 1 runs, wind blows, coming from the front side, the front wall 11F of the crank case 11 and the front wall 20F of the crank case cover 20. Therefore, oil inside the oil tank 33 and the auxiliary tank 34 can be cooled by the wind generated while running. Moreover, oil being collected into the oil pan 25 from the oil return hole 63 can be cooled.

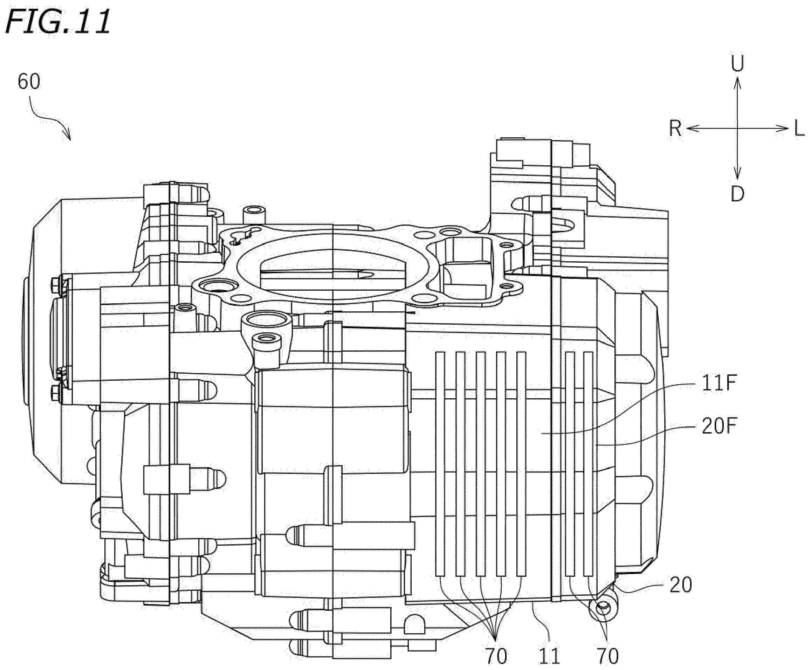

Note that in order to increase the cooling efficiency, cooling fins 70 may be provided on the front wall 11F of the crank case 11 and/or the front wall 20F of the crank case cover 20 as shown in FIG. 11. The cooling fins 70 extend forward. The cooling fins 70 may extend upward and downward, or may extend leftward and rightward. There is no particular limitation on the shape, arrangement and number of the cooling fins 70. By providing the cooling fins 70 as described above, oil inside the oil tank 33 and/or the auxiliary tank 34 can be more efficiently cooled by the wind generated while the motorcycle 1 runs. Moreover, oil being collected into the oil pan 25 from the oil return hole 63 can be cooled more efficiently.

While one embodiment has been described above, the embodiment is merely an example. Various other embodiments are possible.

The guide rib 65 may be absent as long as oil, which has flown over the oil tank 33 through the oil return hole 63, is collected into the oil pan 25.

The first rib portion 65a of the guide rib 65 may be absent. The second rib portion 65b of the guide rib 65 may be absent.

There is no particular limitation on the position of the lower end 65d of the guide rib 65. The position of the lower end 65d of the guide rib 65 may be at or above the lower end of the crank web 18A when the crank web 18A has moved to the most downward position. The position of the lower end 65d of the guide rib 65 may be at or below the upper end of the inlet 45i of the intake path 45.

There is no particular limitation on the size in the up-down direction and the size in the front-rear direction of the guide rib 65. The rear end of the guide rib 65 may be located forward relative to the front end 25f of the oil pan 25.

The position of the oil return hole 63 may be at or below the axis 18c of the crank shaft 18. The position of the oil return hole 63 may be at or below the lower end of the upper edge 23U of the partition side wall 23.

The oil tank 33 does not need to be arranged next to the generator 19. There is no particular limitation on the position of the oil tank 33.

The auxiliary tank 34 may be absent. The discharge path 46, through which oil discharged from the scavenge pump 40 flows, may be connected directly to the oil tank 33.

The oil tank inlet 33i does not need to be formed upward of the partition side wall 23. The partition side wall 23 may extend upward to the upper wall 11U of the crank case 11 or the upper wall 20U of the crank case cover 20. The oil tank inlet 33i may run through the partition side wall 23 at a position downward relative to the upper end of the partition side wall 23.

The flow path cross-sectional area A34 of the auxiliary tank 34 does not need to increase gradually in the upward direction. The flow path cross-sectional area A34 of the auxiliary tank 34 does not need to increase gradually toward the oil tank inlet 33i.

The first side wall 21, the second side wall 22 and the partition side wall 23 do not need to extend perpendicular to the axis 18c of the crank shaft 18.

A straddled vehicle refers to a vehicle that is straddled by the rider. The straddled vehicle is not limited to the motorcycle 1. The straddled vehicle may be an auto tricycle, an ATV (All Terrain Vehicle), or a snowmobile, for example.

### Reference Signs List

1: Motorcycle (straddled vehicle), 10: Internal combustion engine, 11: Crank case, 11Br: Vertical wall, 18: Crank shaft, 18A: Crank web, 18c: Axis of crank shaft, 19: Generator, 20: Crank case cover, 21: First side wall, 22: Second side wall, 23: Partition side wall, 25: Oil pan, 31: First chamber, 32: Second chamber, 33: Oil tank, 33i: Oil tank inlet, 34: Auxiliary tank, 40: Scavenge pump, 41: Intake port (first intake port), 42: Discharge port, 45: Intake path, 45i: Inlet, 50: Feed pump, 51: Intake port (second intake port), 60: Case, 63: Oil return hole, 65: Guide rib, 65a: First rib portion, 65b: Second rib portion, 66: Oil path

## Claims

1. A straddled vehicle (1) comprising an internal combustion engine (10), the internal combustion engine (10) comprising:
a case (60);
a crank shaft (18) rotatably supported on the case (60);
a first side wall (21) arranged inside the case (60) to partition the inside of the case (60) into a first chamber (31) and a second chamber (32);
an oil pan (25) provided on a bottom portion of the first chamber (31) to store oil therein;
an oil tank (33) formed in the second chamber (32);
a scavenge pump (40) having a first intake port (41) that communicates with the oil pan (25) and a discharge port (42) that communicates with the oil tank (33); and
a feed pump (50) having a second intake port (51) that communicates with the oil tank (33),
wherein an oil return hole (63) that connects together the oil tank (33) and the first chamber (31) is formed in an upper portion of the first side wall (21) with regard to an vehicle up-down direction (U-D), **characterized in that**
the internal combustion engine (10) includes a guide rib (65) protruding from the first side wall (21) toward the first chamber (31); and
the guide rib (65) is formed so as to guide oil, which flows into the first chamber (31) from the oil tank (33) through the oil return hole (63), into the oil pan (25), wherein an axis direction of the crank shaft (18) is assumed to be a left-right direction with regard to a vehicle left-right direction (L-R) and a horizontal direction perpendicular to the axis direction of the crank shaft (18) is assumed to be a front-rear direction with regard to a vehicle front-rear direction (F-Re),
the oil return hole (63) is located forward relative to an axis (18c) of the crank shaft (18) with regard to the front-rear direction; and
the guide rib (65) includes a portion located forward relative to a front end (25f) of the oil pan (25) and a portion located rearward relative to the front end (25f) of the oil pan (25) with regard to the front-rear direction.

2. The straddled vehicle (1) according to claim 1 **characterized in that** the guide rib (65) includes a first rib portion (65a) arranged upward relative to a lower end (63d) of the oil return hole (63) with regard to the vehicle up-down direction (U-D), and a second rib portion (65b) arranged at or below a lower end (63d) of the oil return hole (63) with regard to the vehicle up-down direction (U-D); and
the first rib portion (65a) and the second rib portion (65b) extend downward with regard to the vehicle up-down direction (U-D).

3. The straddled vehicle (1) according to claim 1 or 2, **characterized in that** the case (60) and the guide rib (65) together define an oil path (66) that connects together the oil return hole (63) and the oil pan (25).

4. The straddled vehicle (1) according to any one of claims 1 to 3, **characterized in that** the internal combustion engine (10) includes an intake path (45) that has an inlet (45i) facing the oil pan (25) and communicates with the first intake port (41) of the scavenge pump (40);
the crank shaft (18) includes a crank web (18A); and
a lower end (65d) of the guide rib (65) is located downward relative to the crank web (18A) and upward relative to the inlet (45i) of the intake path (45) with regard to the vehicle up-down direction (U-D).

5. The straddled vehicle (1) according to any one of claims 1 to 4, **characterized in that** the oil return hole (63) is located upward relative to an axis (18c) of the crank shaft (18) with regard to the vehicle up-down direction (U-D).

6. The straddled vehicle (1) according to claim 5, **characterized in that** the internal combustion engine (10) includes a generator (19) connected to an end portion of the crank shaft (18);
the case (60) has an arc-shaped vertical wall (11Br) located outward in a radial direction of the generator (19) as viewed from an axis direction of the crank shaft (18); and
the vertical wall (11Br) partitions a portion of the oil tank (33).

7. The straddled vehicle (1) according to claim 5 or 6, **characterized in that** the case (60) includes a crank case (11) that rotatably supports the crank shaft (18);
the first side wall (21) is provided in the crank case (11);
the case (60) includes a crank case cover (20) having a second side wall (22) arranged sideward of the first side wall (21) with regard to a vehicle left-right direction (L-R);
the internal combustion engine (10) includes a partition side wall (23) arranged between the first side wall (21) of the crank case (11) and the second side wall (22) of the crank case cover (20);
the oil tank (33) is formed between the first side wall (21) and the partition side wall (23);
an auxiliary tank (34) is formed between the second side wall (22) and the partition side wall (23);
an oil tank inlet (33i) that connects together the auxiliary tank (34) and the oil tank (33) is formed between the first side wall (21) and the second side wall (22); and
the discharge port (42) of the scavenge pump (40) communicates with the oil tank (33) via the auxiliary tank (34).

8. The straddled vehicle (1) according to claim 7, **characterized in that** the oil tank inlet (33i) is formed upward of the partition side wall (23) with regard to the vehicle up-down direction (U-D).

9. The straddled vehicle (1) according to claim 7 or 8, **characterized in that** the oil
return hole (63) is formed upward relative to a lower end of an upper edge (23U) of the partition side wall (23) with regard to the vehicle up-down direction (U-D).

10. The straddled vehicle (1) according to any one of claims 7 to 9 **characterized in that**
the auxiliary tank (34) is formed so that a flow path cross-sectional area (A34) of the auxiliary tank (34) increases gradually in an upward direction with regard to the vehicle up-down direction (U-D).

11. The straddled vehicle (1) according to any one of claims 7 to 10, **characterized in that** the first side wall (21), the second side wall (22) and the partition side wall (23) are perpendicular to an axis (18c) of the crank shaft (18).

## Patentansprüche

1. Ein Spreiz-Sitz-Fahrzeug (1) mit einem Verbrennungsmotor (10), der Verbrennungsmotor (10) umfasst:
eine Gehäuse (60);
eine Kurbelwelle (18), die drehbar an dem Gehäuse (60) gelagert ist;
eine erste Seitenwand (21), die im Inneren des Gehäuses (60) angeordnet ist, um das Innere des Gehäuses (60) in eine erste Kammer (31) und eine zweite Kammer (32) zu unterteilen;
eine Ölwanne (25), die an einem unteren Teil der ersten Kammer (31) vorgesehen ist, um darin Öl zu speichern;
einen Öltank (33), der in der zweiten Kammer (32) ausgebildet ist;
eine Rückförderpumpe (40), die einen ersten Einlassanschluss (41), der mit der Ölwanne (25) in Verbindung steht, und einen Auslassanschluss (42) hat, der mit dem Öltank (33) in Verbindung steht; und
eine Förderpumpe (50), die einen zweiten Einlassanschluss (51) hat, der mit dem Öltank (33) in Verbindung steht,
wobei ein Ölrücklaufloch (63), das den Öltank (33) und die erste Kammer (31) miteinander verbindet, in einem oberen Abschnitt der ersten Seitenwand (21) in Bezug auf eine Fahrzeug-Auf-Ab-Richtung (U-D) ausgebildet ist, **dadurch gekennzeichnet, dass**
der Verbrennungsmotor (10) eine Führungsrippe (65) enthält, die von der ersten Seitenwand (21) zu der ersten Kammer (31) vorsteht; und
die Führungsrippe (65) ausgebildet ist, so dass sie Öl, das vom Öltank (33) durch das Ölrücklaufloch (63) in die erste Kammer (31) fließt, in die Ölwanne (25) leitet, wobei eine Achsenrichtung der Kurbelwelle (18) als eine Links-Rechts-Richtung in Bezug auf eine Fahrzeug-Links-Rechts-Richtung (L-R) angenommen wird und eine horizontale Richtung senkrecht zur Achsenrichtung der Kurbelwelle (18) als eine Vorne-Hinten-Richtung in Bezug auf eine Fahrzeug-Vorne-Hinten-Richtung (F-Re) angenommen wird,
das Ölrücklaufloch (63) relativ zu einer Achse (18c) der Kurbelwelle (18) in Bezug auf die Vorwärts-Rückwärts-Richtung vorwärts angeordnet ist; und
die Führungsrippe (65) einen Abschnitt, der, mit Bezug auf die Vorwärts-Rückwärts-Richtung, relativ zu einem vorderen Ende (25f) der Ölwanne (25) vorwärts angeordnet ist, und einen Abschnitt, der relativ zu dem vorderen Ende (25f) der Ölwanne (25) rückwärts angeordnet ist, enthält.

2. Das Spreiz-Sitz-Fahrzeug (1) gemäß Anspruch 1, **dadurch gekennzeichnet, dass** die Führungsrippe (65) einen ersten Rippenabschnitt (65a), der relativ zu einem unteren Ende (63d) des Ölrücklauflochs (63) in Bezug auf die Fahrzeug-Auf-Ab-Richtung (U-D) nach oben angeordnet ist, und einen zweiten Rippenabschnitt (65b), der an oder unter einem unteren Ende (63d) des Ölrücklauflochs (63) in Bezug auf die Fahrzeug-Auf-Ab-Richtung (U-D) angeordnet ist, enthält; und
der erste Rippenabschnitt (65a) und der zweite Rippenabschnitt (65b) erstrecken sich in Bezug auf die Fahrzeug-Auf-Ab-Richtung (U-D) nach unten.

3. Das Spreiz-Sitz-Fahrzeug (1) gemäß Anspruch 1 oder 2, **dadurch gekennzeichnet, dass** das Gehäuse (60) und die Führungsrippe (65) zusammen einen Ölpfad (66) definieren, der das Ölrücklaufloch (63) und die Ölwanne (25) miteinander verbindet.

4. Das Spreiz-Sitz-Fahrzeug (1) gemäß irgendeinem der Ansprüche 1 bis 3, **dadurch gekennzeichnet, dass** der Verbrennungsmotor (10) einen Einlasspfad (45) enthält, der einen Einlass (45i) hat, welcher der Ölwanne (25) zugewandt ist, und mit dem ersten Einlassanschluss (41) der Rückförderpumpe (40) in Verbindung steht;
die Kurbelwelle (18) eine Kurbelwange (18A) enthält; und
ein unteres Ende (65d) der Führungsrippe (65) in Bezug auf die Kurbelwange (18A) nach unten und in Bezug auf den Einlass (45i) des Einlasspfades (45) nach oben in Bezug auf die Fahrzeug-Auf-Ab-Richtung (U-D) angeordnet ist.

5. Das Spreiz-Sitz-Fahrzeug (1) gemäß irgendeinem der Ansprüche 1 bis 4, **dadurch gekennzeichnet, dass** das Ölrücklaufloch (63) relativ zu einer Achse (18c) der Kurbelwelle (18) in Bezug auf die Fahrzeug-Auf-Ab-Richtung (U-D) nach oben gerichtet ist.

6. Das Spreiz-Sitz-Fahrzeug (1) gemäß Anspruch 5, **dadurch gekennzeichnet, dass** der Verbrennungsmotor (10) einen Generator (19) enthält, der mit einem Endabschnitt der Kurbelwelle (18) verbunden ist;
das Gehäuse (60) eine bogenförmige vertikale Wand (11Br) hat, die in einer radialen Richtung des Generators (19), von einer Achsenrichtung der Kurbelwelle (18) aus gesehen, nach außen angeordnet ist; und
die vertikale Wand (11Br) trennt einen Teil des Öltanks (33) ab.

7. Das Spreiz-Sitz-Fahrzeug (1) gemäß Anspruch 5 oder 6, **dadurch gekennzeichnet, dass** das Gehäuse (60) ein Kurbelgehäuse (11) enthält, das die Kurbelwelle (18) drehbar lagert;
die erste Seitenwand (21) ist im Kurbelgehäuse (11) vorgesehen;
das Gehäuse (60) enthält eine Kurbelgehäuseabdeckung (20), die eine zweite Seitenwand (22) hat, die in Bezug auf eine Fahrzeug-Links-Rechts-Richtung (L-R) seitlich von der ersten Seitenwand (21) angeordnet ist;
der Verbrennungsmotor (10) enthält eine Trennseitenwand (23), die zwischen der ersten Seitenwand (21) des Kurbelgehäuses (11) und der zweiten Seitenwand (22) der Kurbelgehäuseabdeckung (20) angeordnet ist;
der Öltank (33) ist zwischen der ersten Seitenwand (21) und der Trennseitenwand (23) ausgebildet;
ein Zusatzbehälter (34) ist zwischen der zweiten Seitenwand (22) und der Trennseitenwand (23) ausgebildet;
ein Öltankeinlass (33i), der den Zusatztanktank (34) und den Öltank (33) miteinander verbindet, ist zwischen der ersten Seitenwand (21) und der zweiten Seitenwand (22) ausgebildet; und
der Auslassanschluss (42) der Rückförderpumpe (40) steht über den Zusatztank (34) mit dem Öltank (33) in Verbindung.

8. Das Spreiz-Sitz-Fahrzeug (1) gemäß Anspruch 7, **dadurch gekennzeichnet, dass** der Öltankeinlass (33i) oberhalb der Trennwand (23) in Bezug auf die Fahrzeug-Auf-Ab-Richtung (U-D) ausgebildet ist.

9. Das Spreiz-Sitz-Fahrzeug (1) gemäß Anspruch 7 oder 8, **dadurch gekennzeichnet, dass** das Ölrücklaufloch (63) relativ zu einem unteren Ende einer oberen Kante (23U) der Trennseitenwand (23) in Bezug auf die Fahrzeug-Auf-Ab-Richtung (U-D) nach oben ausgebildet ist.

10. Das Spreiz-Sitz-Fahrzeug (1) gemäß irgendeinem der Ansprüche 7 bis 9, **dadurch gekennzeichnet, dass** der Zusatzbehälter (34) ausgebildet ist, so dass eine Strömungsweg-Querschnittsfläche (A34) des Zusatzbehälters (34) allmählich in einer Aufwärtsrichtung in Bezug auf die Fahrzeug-Auf-Ab-Richtung (U-D) zunimmt.

11. Das Spreiz-Sitz-Fahrzeug (1) gemäß irgendeinem der Ansprüche 7 bis 10, **dadurch gekennzeichnet, dass** die erste Seitenwand (21), die zweite Seitenwand (22) und die Trennwand (23) senkrecht zu einer Achse (18c) der Kurbelwelle (18) stehen.

## Revendications

1. Véhicule à enfourcher (1) comprenant un moteur à combustion interne (10), le moteur à combustion interne (10) comportant :
un boîtier (60) ;
un vilebrequin (18) supporté de manière rotative sur le boîtier (60) ;
une première paroi latérale (21) agencée à l'intérieur du boîtier (60) pour partitionner l'intérieur du boîtier (60) en une première chambre (31) et une deuxième chambre (32) ;
un carter d'huile (25) pourvu dans une portion inférieure de la première chambre (31) pour y stocker de l'huile ;
un réservoir d'huile (33) formé dans la deuxième chambre (32) ;
une pompe de récupération (40) ayant un premier orifice d'admission (41) qui communique avec le carter d'huile (25) et un orifice de refoulement (42) qui communique avec le réservoir d'huile (33) ; et
une pompe d'alimentation (50) ayant un deuxième orifice d'admission (51) qui communique avec le réservoir d'huile (33),
dans lequel un trou de retour d'huile (63) qui connecte entre eux le réservoir d'huile (33) et la première chambre (31) est formé dans une portion supérieure de la première paroi latérale (21) en direction haut-bas du véhicule (U-D),
**caractérisé en ce que**
le moteur à combustion interne (10) comprend une nervure de guidage (65) qui fait saillie depuis la première paroi latérale (21) vers la première chambre (31) ; et
la nervure de guidage (65) est formée de manière à guider l'huile qui s'écoule dans la première chambre (31) depuis le réservoir d'huile (33), à travers le trou de retour d'huile (63), dans le carter d'huile (25), dans lequel une direction axiale du vilebrequin (18) est considérée comme étant une direction gauche-droite pour une direction gauche-droite du véhicule (L-R) et une direction horizontale perpendiculaire à la direction axiale du vilebrequin (18) est considérée comme étant une direction avant-arrière pour une direction avant-arrière du véhicule (F-Re),
le trou de retour d'huile (63) est situé en avant par rapport à un axe (18c) du vilebrequin (18) en direction avant-arrière ; et
la nervure de guidage (65) comprend une portion située en avant par rapport à une extrémité avant (25f) du carter d'huile (25) et une portion située en arrière par rapport à l'extrémité avant (25f) du carter d'huile (25) en direction avant-arrière.

2. Véhicule à enfourcher (1) selon la revendication 1, **caractérisé en ce que**
la nervure de guidage (65) comprend une première portion de nervure (65a) agencée plus haut qu'une extrémité inférieure (63d) du trou de retour d'huile (63) en direction haut-bas du véhicule (U-D), et une deuxième portion de nervure (65b) agencée au même niveau ou plus bas qu'une extrémité inférieure (63d) du trou de retour d'huile (63) en direction haut-bas du véhicule (U-D) ; et
la première portion de nervure (65a) et la deuxième portion de nervure (65b) s'étendent vers le bas en direction haut-bas du véhicule (U-D).

3. Véhicule à enfourcher (1) selon la revendication 1 ou 2, **caractérisé en ce que**
le boîtier (60) et la nervure de guidage (65) définissent ensemble un chemin d'huile (66) qui connecte entre eux le trou de retour d'huile (63) et le carter d'huile (25).

4. Véhicule à enfourcher (1) selon l'une quelconque des revendications 1 à 3, **caractérisé en ce que**
le moteur à combustion interne (10) comprend un chemin d'admission (45) qui comporte une entrée (45i) face au carter d'huile (25) et communique avec le premier orifice d'admission (41) de la pompe de récupération (40) ;
le vilebrequin (18) comprend une âme de vilebrequin (18A) ; et
une extrémité inférieure (65d) de la nervure de guidage (65) est située plus bas que l'âme de vilebrequin (18A) et plus haut que l'entrée (45i) du chemin d'admission (45) en direction haut-bas du véhicule (U-D).

5. Véhicule à enfourcher (1) selon l'une quelconque des revendications 1 à 4, **caractérisé en ce que**
le trou de retour d'huile (63) est situé plus haut qu'un axe (18c) du vilebrequin (18) en direction haut-bas du véhicule (U-D).

6. Véhicule à enfourcher (1) selon la revendication 5, **caractérisé en ce que**
le moteur à combustion interne (10) comprend un générateur (19) connecté à une portion d'extrémité du vilebrequin (18) ;
le boîtier (60) comporte une paroi verticale en forme d'arc (11Er) située vers l'extérieur en direction radiale du générateur (19) vu en direction axiale du vilebrequin (18) ; et
la paroi verticale (11Er) partitionne une portion du réservoir d'huile (33).

7. Véhicule à enfourcher (1) selon la revendication 5 ou 6, **caractérisé en ce que**
le boîtier (60) comprend un carter moteur (11) qui supporte le vilebrequin (18) de manière rotative ;
la première paroi latérale (21) est pourvue dans le carter moteur (11) ;
le boîtier (60) comprend un couvercle de carter moteur (20) comportant une deuxième paroi latérale (22) agencée latéralement par rapport à la première paroi latérale (21) en direction gauche-droite du véhicule (L-R) ;
le moteur à combustion interne (10) comporte une paroi latérale de partition (23) agencée entre la première paroi latérale (21) du carter moteur (11) et la deuxième paroi latérale (22) du couvercle du carter moteur (20) ;
le réservoir d'huile (33) est formé entre la première paroi latérale (21) et la paroi latérale de partition (23) ;
un réservoir auxiliaire (34) est formé entre la deuxième paroi latérale (22) et la paroi latérale de partition (23) ;
une entrée de réservoir d'huile (33i) qui connecte entre eux le réservoir auxiliaire (34) et le réservoir d'huile (33) est formée entre la première paroi latérale (21) et la deuxième paroi latérale (22) ; et
l'orifice de refoulement (42) de la pompe de récupération (40) communique avec le réservoir d'huile (33) via le réservoir auxiliaire (34).

8. Véhicule à enfourcher (1) selon la revendication 7, **caractérisé en ce que**
l'entrée du réservoir d'huile (33i) est formée plus haut que la paroi latérale de partition (23) en direction haut-bas du véhicule (U-D).

9. Véhicule à enfourcher (1) selon la revendication 7 ou 8, **caractérisé en ce que**
le trou de retour d'huile (63) est formé plus haut qu'une extrémité inférieure d'un bord supérieur (23U) de la paroi latérale de partition (23) en direction haut-bas du véhicule (U-D).

10. Véhicule à enfourcher (1) selon l'une quelconque des revendications 7 à 9, **caractérisé en ce que**
le réservoir auxiliaire (34) est formé de telle sorte que la surface en section transversale du chemin d'écoulement (A34) du réservoir auxiliaire (34) augmente graduellement en direction ascendante en direction haut-bas du véhicule (U-D).

11. Véhicule à enfourcher (1) selon l'une quelconque des revendications 7 à 10, **caractérisé en ce que**
la première paroi latérale (21), la deuxième paroi latérale (22) et la paroi latérale de partition (23) sont perpendiculaires à un axe (18c) du vilebrequin (18).
